# EUROPÄISCHE PATENTANMELDUNG

(11) **EP 2 455 833 A1**
(43) Veröffentlichungstag der Anmeldung: **23.05.2012**
(21) Anmeldenummer: 10191843.1
(22) Anmeldetag: 19.11.2010
(51) Int. Cl.: G05B 19/418, H04L 12/40

(54) **Netzkomponente mit Schnittstelle für ein Anzeigemodul**

(71) Anmelder: SIEMENS AKTIENGESELLSCHAFT, 80333 München (DE)
(72) Erfinder: Hack, Heiko, 91301, Forchheim (Kersbach) (DE); Kistner, Timo, 76456, Kuppenheim (DE); Schäffler, Andreas, 76131, Karlsruhe (DE)

(57) **Zusammenfassung**

Die Erfindung betrifft eine Netzkomponente (102) für ein Automatisierungsnetzwerk mit:
- zumindest einem Netzwerkanschluss (106);
- einer Steuerung (108);
- Leuchtdioden (110), wobei die Leuchtdioden mit der Steuerung elektrisch verbunden sind; und
- einer Schnittstelle (112) zum Anschluss eines Anzeigemoduls (104) an die Steuerung;
wobei die Steuerung dazu ausgebildet ist, ein erstes Signal an die Leuchtdioden zu übermitteln, wobei das erste Signal eine Leuchtsequenz der Leuchtdioden auslöst;
wobei die Steuerung dazu ausgebildet ist, ein zweites Signal über die Schnittstelle auszugeben.

## Beschreibung

Die Erfindung betrifft Kommunikationsnetzwerke, genauer gesagt eine Netzkomponente für ein industrielles Automatisierungsnetzwerk.

Eine Netzkomponente in einem Automatisierungsnetzwerk kann beispielsweise ein Schaltnetzknoten oder auch ein Feldgerät sein. Ein Schaltnetzknoten kann auch als Switch oder Hub in dem jeweiligen Netzwerk bezeichnet werden und dient zur Weiterleitung von Daten in dem Netzwerk an andere Netzkomponenten.

Netzkomponenten weisen üblicherweise Leuchtdioden auf, die durch unterschiedliche Farben und festgelegte Blinksequenzen den jeweils aktiven Zustand der Netzkomponente darstellen.

Der Erfindung liegt die Aufgabe zugrunde, eine verbesserte Netzkomponente für ein Automatisierungsnetzwerk, ein verbessertes Anzeigemodul für eine Netzkomponente, ein verbessertes System aus einem Anzeigemodul und einer Netzkomponente und ein verbessertes Verfahren zum Betrieb einer Netzkomponente zu schaffen.

Diese Aufgabe wird durch eine Netzkomponente, ein Anzeigemodul, ein System und ein Verfahren nach den unabhängigen Ansprüchen gelöst. Ausführungsformen der Erfindung sind in den abhängigen Ansprüchen gegeben.

Es wird eine Netzkomponente für ein Automatisierungsnetzwerk geschaffen. Die Netzkomponente weist zumindest einen Netzwerkanschluss auf. Dieser dient zum Anschluss der Netzkomponente an das Automatisierungsnetzwerk.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet) zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikation und/oder drahtlose Kommunikation umfassen.

Eine Netzkomponente kann beispielsweise ein Computer, PC und/oder Controller mit Steuerungs-Aufgaben bzw. Steuerungs-Fähigkeiten sein. Insbesondere kann eine Netzkomponente beispielsweise eine industrielle Netzkomponente sein, die z.B. speziell zur Steuerung und/oder Regelung industrieller Anlagen ausgebildet, eingerichtet und/oder vorgesehen sein kann. Insbesondere können solche Netzkomponenten bzw. industriellen Netzkomponenten echtzeitfähig sein, d.h. eine Steuerung bzw. Regelung in Echtzeit ermöglichen. Dazu kann die Netzkomponente bzw. die industrielle Netzkomponente z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen. Eine Netzkomponente kann auch ein Schalt-Netzknoten, Switch oder Hub sein. Eine solche Netzkomponente weist mehrere Netzwerkanschlüsse auf und leitet Daten im Automatisierungsnetzwerk weiter. Eine solche Netzkomponente kann also Daten von einer anderen Komponente des Automatisierungsnetzwerks empfangen und an eine weitere Komponente des Automatisierungsnetzwerks ausgeben.

Eine Netzkomponente kann auch z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP) , ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Die Netzkomponente weist außerdem eine Steuerung auf. Die Steuerung kann beispielsweise durch einen Prozessor realisiert sein, der Programminstruktionen ausführt. Die Programminstruktionen können beispielsweise auf einem digitalen Speichermedium gespeichert sein. In einem Schaltnetzknoten dient die Steuerung zur Weiterleitung der Daten in dem Automatisierungsnetzwerk. Bei einem Feldgerät kann die Steuerung beispielsweise zur Steuerung eines Aktors und/oder eines Sensors dienen. Außerdem umfasst die Netzkomponente Leuchtdioden, die mit der Steuerung elektrisch verbunden sind. Die Steuerung ist dazu ausgebildet, ein erstes Signal an die Leuchtdioden auszugeben. Das erste Signal löst eine Leuchtsequenz der Leuchtdioden aus. So ist für einen Benutzer durch die Leuchtsequenz der Leuchtdioden ablesbar, in welchem Zustand sich die Netzkomponente befindet und ob eventuell ein Fehler vorliegt.

Außerdem weist die Netzkomponente eine Schnittstelle zum Anschluss eines Anzeigemoduls an die Steuerung auf. Die Steuerung ist dazu ausgebildet, ein zweites Signal über die Schnittstelle an das Anzeigemodul auszugeben. Das zweite Signal löst am Anzeigemodul die Anzeige des aktiven Zustands der Netzkomponente oder eine Fehleranmeldung aus.

Das Anzeigemodul kann drahtgebunden mit der Schnittstelle verbunden sein. Alternativ kann das Anzeigemodul auch drahtlos mit der Schnittstelle verbunden sein. Zur drahtlosen Datenübertragung über die Schnittstelle an das Anzeigemodul und in umgekehrter Richtung kann beispielsweise eine Funkverbindung, WLAN, eine Mobilfunkverbindung oder Bluetooth verwendet werden.

Das Anzeigemodul kann außerdem dazu ausgebildet sein, die Eingabe von Daten zu ermöglichen. Der Benutzer kann also Daten an dem Anzeigemodul eingeben. Diese eingegebenen Daten werden an die Steuerung über die Schnittstelle ausgegeben. Die Steuerung ist dazu ausgebildet, die eingegebenen Daten zu verarbeiten. So ist beispielsweise die Neu- und Umkonfiguration der Netzkomponente durch einen Benutzer über das Anzeigemodul möglich.

Die Anzeige des aktiven Zustands oder von Fehlermeldungen über das Anzeigemodul und die Eingabe von Daten über das Anzeigemodul ist vorteilhaft, da der Komfort für den Benutzer erhöht wird. Der Benutzer muss nicht mehr wissen oder im Handbuch nachgucken, was eine bestimmte Leuchtsequenz der Leuchtdioden bedeutet. Außerdem kann der Benutzer komfortabel über das Anzeigemodul Daten an der Netzkomponente eingeben. Das Anzeigemodul kann beispielsweise ein Touch-Display sein, das dem Benutzer eine komfortable Eingabe von Daten ermöglicht.

Eine solche Netzkomponente erlaubt den Anschluss eines Anzeigemoduls, ohne dass der Anschluss zwangsläufig zu erfolgen hat. Dies ist vorteilhaft, da der Benutzer beispielsweise zunächst eine günstige Version der Netzkomponente ohne Anzeigemodul kaufen kann. Falls der Benutzer eine Erweiterung der Funktionalität und des Komforts der Netzkomponente wünscht, kann er einfach ein Anzeigemodul nachkaufen und muss nicht eine teurere Netzkomponente kaufen. Mit anderen Worten ist die Netzkomponente als günstige Ausführungsform herstellbar, aber auch auf eine höherwertigere Ausstattung ausrüstbar.

Auch produktionstechnisch ergibt sich ein Vorteil der erfindungsgemäßen Netzkomponente. Um zwei verschiedenwertige Netzkomponenten herzustellen, muss lediglich die Netzkomponente und das Anzeigemodul hergestellt werden. Ausgeliefert werden können dann eine niederwertigere und eine höherwertigere Variante der Netzkomponente, mit Anzeigemodul oder ohne Anzeigemodul.

Nach Ausführungsformen der Erfindung ist die Netzkomponente ein Feldgerät und weist zumindest einen Aktor und/oder zumindest einen Sensor auf. Der zumindest eine Aktor und/oder der zumindest eine Sensor ist zum Empfang von Daten über den zumindest einen Netzwerkanschluss vom Automatisierungsnetzwerk und/oder zur Ausgabe von Daten über den zumindest einen Netzwerkanschluss an das Automatisierungsnetzwerk ausgebildet. Die Steuerung ist elektrisch mit dem zumindest einem Aktor und/oder mit dem zumindest einem Sensor verbunden. Die Steuerung ist außerdem dazu ausgebildet, eine Fehlermeldung, Zustandsdaten, Projektierungsdaten und/oder Statistikdaten des zumindest einen Aktors und/oder des zumindest einen Sensors auszulesen. Die Steuerung ist außerdem dazu ausgebildet, das erste Signal in Abhängigkeit von der ausgelesenen Fehlermeldung, den ausgelesenen Zustandsdaten, Projektierungsdaten und/oder Statistikdaten zu übermitteln. Ferner ist die Steuerung dazu ausgebildet, das zweite Signal in Abhängigkeit von der ausgelesenen Fehlermeldung, den ausgelesenen Zustandsdaten, den Projektierungsdaten und/oder Statistikdaten auszugeben. Eingabedaten können über die Schnittstelle durch die Steuerung von dem Anzeigemodul empfangen und verarbeitet werden.

Unter einem Aktor wird hier insbesondere ein Bauteil oder eine Komponente verstanden, die durch die Steuerung dazu veranlasst werden kann, eine bestimmte Aktion auszuführen. Dies kann beispielsweise das Anschalten einer Pumpe, das Öffnen eines Ventils oder das Schließen oder Öffnen eines elektrischen Schaltkreises sein.

Unter einem Sensor wird hier insbesondere ein Bauteil oder eine Komponente verstanden, die einen Messwert messen und an die Steuerung ausgeben kann. Dieser Messwert kann beispielsweise ein Füllstand, ein Druck, eine Flussgeschwindigkeit, ein Strom oder eine Spannung sein.

Zustandsdaten können beispielsweise Informationen darüber sein, ob die Netzkomponente aktuell Daten empfängt oder aussendet oder ob die Netzkomponente passiv ist und zurzeit keine Daten empfängt oder aussendet. Projektierungsdaten können Informationen über die Projektierung der Netzkomponente und des Automatisierungsnetzwerks sein. Statistikdaten können beispielsweise Informationen darüber sein, wie viel Daten die Netzkomponente empfangen und/oder gesendet hat und/oder die Auslastung der Netzkomponente. Die Zustandsdaten, Projektierungsdaten und/oder Statistikdaten können auch Informationen über den zumindest einen Aktor und/oder über den zumindest einen Sensor umfassen. Die Zustandsdaten können in diesem Falle beispielsweise Informationen umfassen, ob der zumindest eine Aktor und/oder der zumindest eine Sensor aktuell im Betrieb ist und Daten empfängt und/oder sendet. Projektierungsdaten können Informationen darüber umfassen, welche Daten an den Aktor und/oder den Sensor gesendet werden sollen und/oder welche Daten von dem zumindest einem Aktor und/oder dem zumindest einem Sensor empfangen werden sollen. Statistikdaten über den zumindest einen Aktor oder den zumindest einen Sensor können beispielsweise Daten darüber sein, die Informationen über die in der Vergangenheit gelieferten Daten des zumindest einen Aktors und/oder des zumindest einen Sensors umfassen.

Nach Ausführungsformen der Erfindung ist die Schnittstelle dazu ausgebildet, das Anzeigemodul während des Betriebs an die Netzkomponente anzuschließen und von der Netzkomponente zu trennen.

Nach Ausführungsformen der Erfindung ist das Anzeigemodul als Touchpanel ausgebildet. Mit anderen Worten umfasst das Anzeigemodul ein Display kann beispielsweise ein Display zur Eingabe von Informationen. Das Anzeigemodul kann beispielsweise als Bildschirm zur Darstellung von Text oder Bildern ausgebildet sein. Über ein solches Anzeige- und/oder Eingabemodul können beispielsweise auch Daten für den Schalt-Netzknoten eingegeben werden und dieser beispielsweise auch konfiguriert werden. Auch die Konfiguration und Einstellung einzelner oder mehrerer der Netzwerkanschlüsse der Netzkomponente kann so erfolgen.

Alternativ oder zusätzlich kann das Anzeigemodul auch Eingabeelemente zur Eingabe von Informationen, wie beispielsweise Schalter, Knöpfe umfassen.

Nach Ausführungsformen der Erfindung ist die Steuerung dazu ausgebildet, dass angeschlossene Anzeigemodul zu erkennen und nur bei einem angeschlossenen Anzeigemodul das zweite Signal auszugeben.

Nach Ausführungsformen der Erfindung ist die Steuerung zur Ausgabe eines dritten Signals über die Schnittstelle ausgebildet. Das dritte Signal umfasst Informationen über den Betriebszustand der Netzkomponente. Somit kann also auch der Betriebszustand der Netzkomponente über das Anzeigemodul angezeigt werden. Der Betriebszustand kann beispielsweise an, aus oder im Standby-Betrieb sein.

In einem weiteren Aspekt betrifft die Erfindung ein Anzeigemodul für eine Netzkomponente. Das Anzeigemodul ist zum Anschließen einer Schnittstelle der Netzkomponente ausgebildet. Außerdem ist das Anzeigemodul zum Empfang eines Signals von der Netzkomponente und zur Anzeige einer Fehlermeldung, der Zustandsdaten, Projektierungsdaten und/oder Statistikdaten ausgebildet.

Nach Ausführungsformen der Erfindung weist das Anzeigemodul außerdem Eingabemittel auf. Die Eingabemittel ermöglichen die Eingabe von Eingabedaten beispielsweise durch einen Benutzer. Das Anzeigemodul ist also dazu ausgebildet, Eingabedaten über die Eingabemittel zu empfangen und an die Netzkomponente auszugeben. Hierfür kann das Anzeigemodul beispielsweise als sogenanntes Touchpanel ausgebildet sein. Dies ist besonders vorteilhaft, da so die Benutzereingabe äußerst komfortabel wird und dem Benutzer verschiedene Eingabemasken dargestellt werden können.

Nach Ausführungsformen der Erfindung handelt es sich bei der Netzkomponente um einen modularen Schaltnetzknoten für ein Kommunikationsnetzwerk, insbesondere ein industrielles Kommunikationsnetzwerk. Der modulare Schaltnetzknoten umfasst eine Schaltnetzknoten-Basiseinheit und mindestens ein Portmodul. Das mindestens eine Portmodul weist mindestens eine Anschluss-Schnittstelle zur Ankopplung an das Kommunikationsnetz auf. Der modulare Schaltnetzknoten ist zur Weiterleitung von über eine der Anschluss-Schnittstellen des modularen Schaltnetzknotens eingehende Kommunikationsdaten an mindestens eine weitere der Anschluss-Schnittstellen des modularen Schaltnetzknotens ausgebildet und eingerichtet. Die Schaltnetzknoten-Basiseinheit ist derart ausgebildet und eingerichtet, dass mindestens eines der Portmodule gegen ein Anzeigemodul zur Erweiterung der Funktionalität des Schaltnetzknotens austauschbar ist. Das Anzeigemodul ist vorzugsweise ein Anzeigemodul.

In einem weiteren Aspekt betrifft die Erfindung ein System aus einer Netzkomponente nach Ausführungsformen der Erfindung und einen Anzeigemodul nach Ausführungsformen der Erfindung.

In noch einem weiteren Aspekt betrifft die Erfindung ein Verfahren zum Betrieb einer Netzkomponente mit einer Schnittstelle für ein Anzeigemodul, Leuchtdioden, zumindest einen Aktor und/oder zumindest einem Sensor in einem Automatisierungsnetzwerk. Zunächst wird detektiert, ob das Anzeigemodul an der Schnittstelle angeschlossen ist. Dies kann beispielsweise durch eine Steuerung der Netzkomponente erfolgen. Die Steuerung kann beispielsweise ein Prozessor sein, der Programminstruktionen ausführt, die in einem digitalen Speichermedium gespeichert sind. Außerdem detektiert die Steuerung, ob eine Fehlermeldung des zumindest einen Aktors und/oder des zumindest einen Sensors vorliegt und liest diese Fehlermeldung aus, falls sie vorliegt. Außerdem liest die Steuerung Zustandsdaten, Projektierungsdaten und/oder Statistikdaten aus.

Die Netzkomponente ist ferner dazu ausgebildet, ein erstes Signal an die Leuchtdioden in Abhängigkeit von der ausgelesenen Fehlermeldung, den ausgelesenen Zustandsdaten, Projektierungsdaten und/oder Statistikdaten zu übermitteln. Das erste Signal löst eine Leuchtsequenz der Leuchtdioden aus. Vorzugsweise geschieht die Übermittlung des ersten Signals nur dann, wenn kein Anzeigemodul an der Schnittstelle angeschlossen ist. Dem Benutzer wird so also ermöglicht, Zustandsdaten, Fehlermeldungen, Projektierungsdaten und/oder Statistikdaten auszulesen, ohne dass ein Anzeigemodul angeschlossen ist.

Falls nun ein Anzeigemodul angeschlossen ist, wird ein zweites Signal in Abhängigkeit von der ausgelesenen Fehlermeldung, den ausgelesenen Zustandsdaten, Projektierungsdaten und/oder Statistikdaten von der Netzkomponente über die Schnittstelle an das Anzeigemodul ausgegeben.

Im Folgenden wird die vorliegende Erfindung beispielhaft mit Bezug auf die beiliegende Figur näher erläutert. Es zeigt
- Figur 1: ein Blockdiagramm eines Systems aus einer Netzkom-ponente und einem Anzeigemodul nach Ausführungs-formen der Erfindung; und
- Figur 2: ein Blockdiagramm eines Switches mit einem Port-Modul und einem Anzeigemodul.

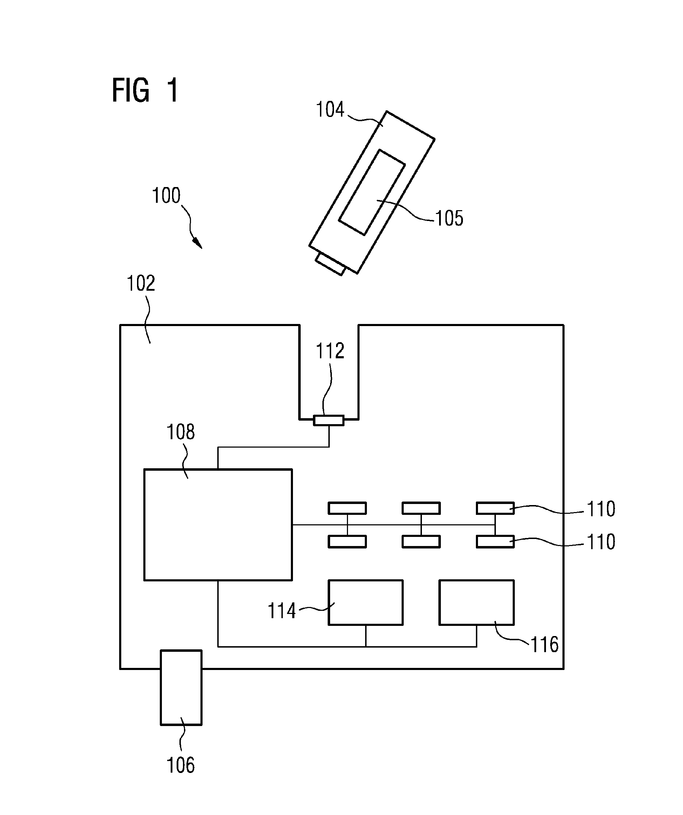

Figur 1 ist ein Blockdiagramm eines Systems 100 bestehend aus einer Netzkomponente 102 und einem Anzeigemodul 104. Die Netzkomponente 102 weist zumindest einen Netzwerkanschluss 106 auf. Mit dem Netzwerkanschluss 106 kann die Netzkomponente an ein Automatisierungsnetzwerk oder Kommunikationsnetzwerk angeschlossen werden. Die Netzkomponente kann auch weitere Netzwerkanschlüsse umfassen. Diese sind in Figur 1 aus Übersichtlichkeitsgründen nicht dargestellt.

Außerdem umfasst die Netzkomponente eine Steuerungseinheit 108, Leuchtdioden 110 und eine Schnittstelle 112.

Das Anzeigemodul 104 kann über die Schnittstelle 112 mit der Netzkomponente 102 verbunden werden. Über die Schnittstelle 112 können Daten von der Steuerung 108 an das Anzeigemodul ausgegeben oder von dem Anzeigemodul 104 empfangen werden. Vorzugsweise ist das Anzeigemodul 104 als Anzeigemodul ausgebildet. Dies kann beispielsweise durch einen Touchscreen geschehen. In diesem Fall kann das Anzeigemodul 104 auch als Touchpanel bezeichnet werden.

Die Steuerung ist dazu ausgebildet, ein erstes Signal an die Leuchtdioden 110 zu übermitteln. Das erste Signal löst eine Leuchtsequenz der Leuchtdioden aus, die beispielsweise den Betriebszustand der Netzkomponente darstellen kann. Alternativ oder zusätzlich kann die Leuchtsequenz der Leuchtdioden auch eine Fehlermeldung, Zustandsdaten, Projektierungsdaten und/oder Statistikdaten anzeigen. Die Netzkomponente 102 weist außerdem einen Aktor 114 und einen Sensor 116 auf. Die Steuerung kann Fehlermeldungen, Zustandsdaten, Projektierungsdaten und/oder Statistikdaten des Aktors 114 und des Sensors 116 auslesen. Durch die Übermittlung des ersten Signals an die Leuchtdioden 110 können die Leuchtdioden 110 dazu veranlasst werden, eine Leuchtsequenz anzuzeigen, die beispielsweise die ausgelesene Fehlermeldung oder andere Zustandsdaten, Projektierungsdaten und/oder Statistikdaten anzeigen.

Die Steuerung 108 ist außerdem dazu ausgebildet, ein zweites Signal über die Schnittstelle 112 an das Anzeigemodul 104 auszugeben. Das Anzeigemodul 104 verfügt vorzugsweise über ein Display 105, über das die Fehlermeldung, Zustandsdaten, Projektierungsdaten und/oder Statistikdaten oder auch der Betriebszustand der Netzkomponente dargestellt werden können. Das Display 105 ist vorzugsweise ein Touch-Display, was auch die Eingabe von Daten ermöglicht. Die über das Display 105 eingegebenen Daten werden über die Schnittstelle 112 an die Steuerung 108 ausgegeben und dort verarbeitet.

Die Netzkomponente 102 ist also durch das Anzeigemodul 104 zu einem System 100 erweiterbar. Dies ist vorteilhaft, da ohne großen Produktionsaufwand zwei verschiedene Varianten der Netzkomponente hergestellt werden können. Eine günstigere Einstiegsvariante beispielsweise zeigt die verschiedenen Meldungen über Leuchtdioden an, während eine teurere Variante die Daten komfortabel dem Benutzer über das Anzeigemodul 104 anzeigt und die Eingabe von Daten über das Display 105 ermöglicht. Außerdem kann die günstigere Einstiegsvariante durch Nachkauf des Anzeigemoduls 104 erweitert werden.

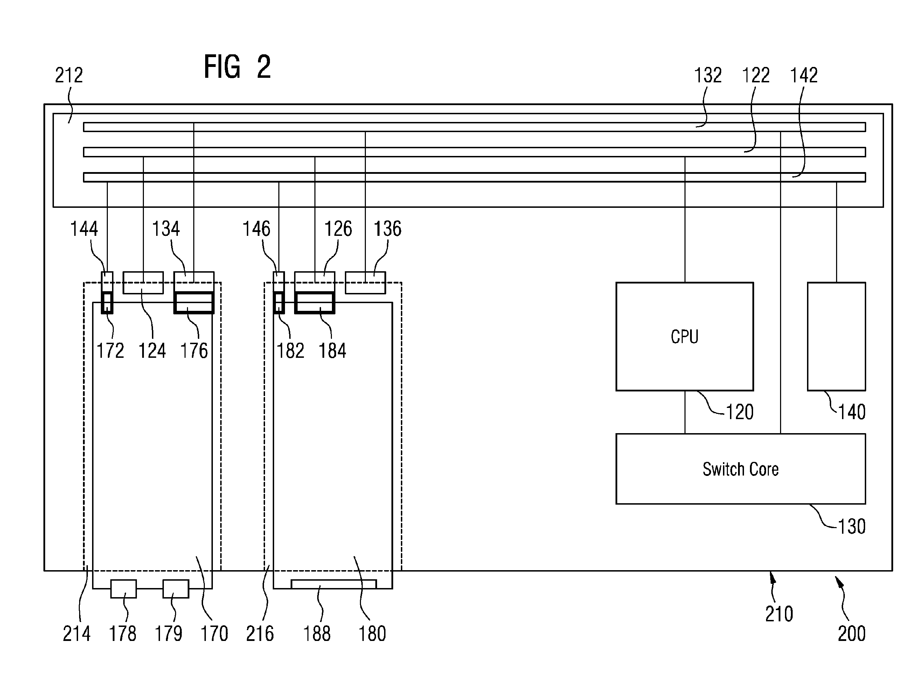

Figur 2 zeigt einen Ethernet-Switch 200, welcher aus einer Basis-Einheit 210, einem darin eingesteckten Port-Modul 170, einem darin eingesteckten Anzeigemodul 180 besteht.

Die Basiseinheit weist dabei eine so genannte "Backplane" 212 auf, welche einen PCI-Express-Systembus (PCIe-Bus) 122, einen internen Hochgeschwindigkeits-Netzwerkbus 132 und einen Stromversorgungsbus 142 umfasst. Dabei ist der Stromversorgungsbus 142 mit einem Netzteil 140 verbunden, während der PCI-Express (PCIe)-Bus 122 mit einer Zentraleinheit 120 der Basiseinheit 210 sowie der Hochgeschwindigkeits-Netzwerkbus 132 mit einem zentralen Daten-Weiterleitungs-Funktionsblock 130 ("Switch-Core") verbunden ist. Beispielsweise zum Betrieb oder zur Konfiguration des Switch-Cores 130 ist die Zentraleinheit 120 zudem auch mit dem Switch-Core 130 verbunden.

Die Basiseinheit 210 weist einen ersten Modulschacht 214 auf, in welchem das Portmodul 170 installiert ist. Im Modulschacht 214 ist ein PCIe-Stecker 124, ein Netzwerkstecker 134 sowie ein Stromversorgungsstecker 144 installiert, welcher mit den jeweiligen Bussen der Backplane 212 verbunden sind. Das Portmodul weist einen Netzwerkstecker 176 sowie einen Stromversorgungsstecker 172 im rückwärtigen Bereich zum Einstecken in die entsprechenden Stecker des Modulschachts auf. Weiterhin umfasst das Portmodul 170 eine erste Ethernet-Schnittstelle 178 sowie eine zweite Ethernet-Schnittstelle 179 zum Anschluss von Ethernet-Leitungen. Über die Ethernet-Schnittstelle 178, 179 ankommende Informationen können über die Netzwerk-Bus-Stecker 176 des Moduls und des Modulschachts 134 an den Netzwerkbus 132 sowie an den Switch-Core 130 weitergegeben werden und dann von dort an entsprechende Ports des Switches 200 weitergeleitet.

In einem zweiten Modulschacht 216 der Basiseinheit 210, welcher wiederum einen PCIe-Stecker 126, einen Netzwerkbus-Stecker 136 sowie einen Stromversorgungsstecker 146 aufweist, ist ein Displaymodul 180 als Anzeigemodul 180 installiert. Dieses Displaymodul 180 weist einen PCIe-Stecker 184 sowie einen Stromversorgungsstecker 182 auf, welcher im in Figur 1 dargestellten Aufnahmezustand in die entsprechenden Stecker 126, 146 des zweiten Modulschachts 216 eingesteckt sind. Der weitere, in diesem Modulschacht vorhandene Netzwerkbus-Stecker 136 wird vom Displaymodul 180 nicht benützt. Das Displaymodul 180 weist weiterhin einen Bildschirm 188 zur Darstellung beispielsweise des Zustands einzelner Ports oder Anschluss-Schnittstellen des Switches 200 dar. Die auf dem Display dargestellte Information 188 wird kann weiterhin auch über die PCIe-Stecker 124, 126 und den PCIe-Bus 122 an die Zentraleinheit 120 geschickt werden, welche dann, ggf. nach Einholen weiterer Informationen beispielsweise vom Switch-Core 130, die zusätzliche Informationen auf dem genannten Weg wieder an das Displaymodul 180 zurücksendet.

### Liste der Bezugszeichen

- 100: System
- 102: Netzkomponente
- 104: Anzeigemodul
- 105: Display
- 106: Netzwerkanschluss
- 108: Steuerung
- 110: Leuchtdioden
- 112: Schnittstelle
- 114: Aktor
- 116: Sensor
- 120: Zentraleinheit
- 122: Systembus
- 124: PCIe-Stecker
- 126: PCIe-Stecker
- 130: Switch-Core
- 132: Netzwerkbus
- 134: Netzwerkstecker
- 136: Netzwerkstecker
- 140: Netzteil
- 142: Stromversorgungsbus
- 144: Stromversorgungsstecker
- 146: Stromversorgungsstecker
- 170: Port-Modul
- 172: Stromversorungsstecker
- 176: Netzwerkstecker
- 178: Ethernet-Schnittstelle
- 179: Ethernet-Schnittstelle
- 180: Anzeigemodul
- 182: Stromversorgungsstecker
- 184: PCIe-Stecker
- 188: Information
- 212: Backplane
- 214: Modulschacht
- 216: Modulschacht

## Patentansprüche

1. Netzkomponente (102) für ein Automatisierungsnetzwerk mit:
- zumindest einem Netzwerkanschluss (106);
- einer Steuerung (108);
- Leuchtdioden (110), wobei die Leuchtdioden mit der Steuerung elektrisch verbunden sind; und
- einer Schnittstelle (112) zum Anschluss eines Anzeigemoduls (104; 180) an die Steuerung;
wobei die Steuerung dazu ausgebildet ist, ein erstes Signal an die Leuchtdioden zu übermitteln, wobei das erste Signal eine Leuchtsequenz der Leuchtdioden auslöst;
wobei die Steuerung dazu ausgebildet ist, ein zweites Signal über die Schnittstelle auszugeben.

2. Netzkomponente nach Anspruch 1, wobei die Netzkomponente ein Feldgerät ist und außerdem zumindest einen Aktor (114) und/oder zumindest einen Sensor (116) aufweist;
wobei der zumindest eine Aktor und/oder der zumindest eine Sensor zum Empfang von Daten über den zumindest einen Netzwerkanschluss vom Automatisierungsnetzwerk und/oder zur Ausgabe von Daten über den zumindest einen Netzwerkanschluss an das Automatisierungsnetzwerk ausgebildet ist;
wobei die Steuerung elektrisch mit dem zumindest einem Aktor und/oder mit dem zumindest einem Sensor verbunden ist;
wobei die Steuerung dazu ausgebildet ist, eine Fehlermeldung, Zustandsdaten, Projektierungsdaten und/oder Statistikdaten des zumindest einen Aktors und/oder des zumindest einen Sensors auszulesen;
wobei die Steuerung dazu ausgebildet ist, das erste Signal in Abhängigkeit von der ausgelesenen Fehlermeldung, den ausgelesenen Zustandsdaten, Projektierungsdaten und/oder Statistikdaten zu übermitteln;
wobei die Steuerung dazu ausgebildet ist, das zweite Signal in Abhängigkeit von der ausgelesenen Fehlermeldung, den ausgelesenen Zustandsdaten, Projektierungsdaten und/oder Statistikdaten auszugeben; und
wobei die Steuerung dazu ausgebildet ist, Eingabedaten über die Schnittstelle zu empfangen und zu verarbeiten.

3. Netzkomponente nach einem der vorhergehenden Ansprüche, wobei die Schnittstelle dazu ausgebildet ist, das Anzeigemodul während des Betriebs an die Netzkomponente anzuschließen und von der Netzkomponente zu trennen.

4. Netzkomponente nach einem der vorhergehenden Ansprüche, wobei das Anzeigemodul als Touch-Panel ausgebildet ist.

5. Netzkomponente nach einem der vorhergehenden Ansprüche, wobei die Steuerung dazu ausgebildet ist, das angeschlossene Anzeigemodul zu erkennen und nur bei einem angeschlossenen Anzeigemodul das zweite Signal auszugeben.

6. Netzkomponente nach einem der vorhergehenden Ansprüche, wobei die Steuerung zur Ausgabe eines dritten Signals über die Schnittstelle ausgebildet ist, und wobei das dritte Signal Informationen über den Betriebszustand der Netzkomponente umfasst.

7. Anzeigemodul (104; 180) für eine Netzkomponente, wobei das Anzeigemodul zum Anschließen an eine Schnittstelle der Netzkomponente ausgebildet ist, und wobei das Anzeigemodul zum Empfang eines Signals von der Netzkomponente und zur Anzeige einer Fehlermeldung, der Zustandsdaten, Projektierungsdaten und/oder Statistikdaten ausgebildet ist.

8. Anzeigemodul nach Anspruch 7, wobei das Anzeigemodul außerdem Eingabemittel aufweist, wobei das Anzeigemodul dazu ausgebildet ist, Eingabedaten über die Eingabemittel zu empfangen und an die Netzkomponente auszugeben.

9. System (100) aus einer Netzkomponente nach einem der Ansprüche 1-6 und einem Anzeigemodul nach einem der Ansprüche 7 oder 8.

10. System nach Anspruch 9, wobei das System ferner mindestens ein Port-Modul (170) umfasst,
wobei das mindestens eine Port-Modul mindestens eine Anschluss-Schnittstelle (178; 179) zur Ankopplung an das Kommunikationsnetz aufweist, und
wobei das System zur Weiterleitung von über eine der Anschluss-Schnittstellen eingehende Kommunikationsdaten an mindestens eine weitere der Anschluss-Schnittstellen ausgebildet und eingerichtet ist, **dadurch gekennzeichnet, dass** die Netzwerkkomponente derart ausgebildet und eingerichtet ist, dass mindestens eines der Port-Modul gegen das Anzeigemodul (180) zur Erweiterung der Funktionalität des Systems austauschbar ist.

11. Verfahren zum Betrieb einer Netzkomponente (102) mit einer Schnittstelle (112) für ein Anzeigemodul (104), Leuchtdioden (110), zumindest einem Aktor (114) und/oder zumindest einem Sensor (116) in einem Automatisierungsnetzwerk, wobei das Verfahren die folgenden Schritte umfasst:
- Detektierung, ob das Anzeigemodul an der Schnittstelle angeschlossen ist;
- Detektierung, ob eine Fehlermeldung des zumindest einen Aktors und/oder des zumindest einen Sensors vorliegt;
- Auslesen der Fehlermeldung, falls detektiert wurde, dass die Fehlermeldung vorliegt;
- Auslesen von Zustandsdaten, Projektierungsdaten und/oder Statistikdaten;
- Übermittlung eines ersten Signals an die Leuchtdioden in Abhängigkeit von der ausgelesenen Fehlermeldung, den ausgelesenen Zustandsdaten, Projektierungsdaten und/oder Statistikdaten, wobei das erste Signal eine Leuchtsequenz der Leuchtdioden auslöst, wenn detektiert wurde, dass kein Anzeigemodul an der Schnittstelle angeschlossen ist;
Ausgabe eines zweiten Signals in Abhängigkeit von der ausgelesenen Fehlermeldung, den ausgelesenen Zustandsdaten, Projektierungsdaten und/oder Statistikdaten über die Schnittstelle an das Anzeigemodul, wenn detektiert wurde, dass das Anzeigemodul an der Schnittstelle angeschlossen ist.
